(19) **Europäisches Patentamt / European Patent Office / Office européen des brevets**

(11) **EP 2 963 573 A1**

(12) # EUROPEAN PATENT APPLICATION
published in accordance with Art. 153(4) EPC

(43) Date of publication:
06.01.2016 Bulletin 2016/01

(51) Int Cl.:
*G06F 19/00* (2011.01)

(21) Application number: 13876200.0

(22) Date of filing: 11.10.2013

(86) International application number:
PCT/JP2013/006091

(87) International publication number:
WO 2014/132300 (04.09.2014 Gazette 2014/36)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 27.02.2013 JP 2013037920

(71) Applicant: Sumitomo Heavy Industries, Ltd.
Tokyo 141-6025 (JP)

(72) Inventor: ICHISHIMA, Daiji
Yokosuka-shi
Kanagawa 237-8555 (JP)

(74) Representative: Walcher, Armin
Louis, Pöhlau, Lohrentz
Patentanwälte
Postfach 30 55
90014 Nürnberg (DE)

(54) **ANALYZER**

(57) An analyzer analyzes a multiphase flow using a renormalized molecular dynamics method. The analyzer includes a particle system acquisition unit configured to acquire a particle system including a plurality of particles describing the multiphase flow, a force calculation unit configured to calculate a force applied to a particle based on an inter-particle distance, and a particle state calculation unit configured to calculate at least one of the position and speed of the particle by applying the force calculated by the force calculation unit to an equation of motion of a discretized particle. The multiphase flow is a flow in which at least a first phase and a second phase having a particle density lower than that of the first phase, a particle of the first phase is set to have a particle size obtained by renormalization processing, and a particle of the second phase is set to have a particle size greater than a particle size obtained by the same renormalization processing as the renormalization processing applied to the first phase.

FIG. 2

EP 2 963 573 A1

**Description**

Technical Field

A certain embodiment of the invention relates to an analyzer which analyzes a particle system.

Background Art

In the related art, as methods of analyzing phenomenon of general material science using a computer based on classical mechanics or quantum mechanics, simulations based on a molecular dynamics method (hereinafter, referred to as "MD method") is known. In the simulations based on the MD method, since the movement of each particle is physically analyzed more strictly, preferred analysis of phase transition or the like is enabled; however, since analysis of a macro size causes a significant increase in computational complexity, only a small number of particles are analyzed practically. Accordingly, the related art MD method is often primarily used for purposes independent of a micro-scale or a shape of an object to be analyzed, such as prediction of physical properties of materials.

In recent years, a renormalized molecular dynamics method (hereinafter, referred to as "RMD method") which is a developed version of the MD method to analyze a macro-scale system is suggested (for example, see PTL 1).

Citation List

Patent Literature

[PTL 1] Japanese Unexamined Patent Application Publication No. 2010-146368

Summary of Invention

Technical Problem

When analyzing characteristic phenomenon in an interface of a multiphase flow, such as a gas-liquid two-phase flow or a solid-gas two-phase flow, with the RMD method, if a renormalization rank is increased in order to reduce a calculation time, the number of particles of a phase having a low density is extremely decreased and the particles may not behave as a continuum. That is, the phase may become a rarefied flow. In this case, the analysis result is deviated from the actual state.

The present invention has been made by considering the above-described problems, and object thereof is to provide an analysis technique which enables more accurate analysis of characteristic phenomenon in an interface of a multiphase flow.

Solution to Problem

In order to solve the problems described above, an analyzer according to an embodiment of the invention which analyzes a multiphase flow using a renormalized molecular dynamics method includes a particle system acquisition unit configured to acquire a particle system including a plurality of particles describing the multiphase flow, a force calculation unit configured to calculate a force applied to the particle based on an inter-particle distance, and a particle state calculation unit configured to calculate at least one of the position and speed of the particles by applying the force calculated by the force calculation unit to an equation of motion of a discretized particle. The multiphase flow is a flow in which at least a first phase and a second phase having a particle density lower than that of the first phase are mixed, a particle of the first phase is set to have a particle size determined by an inter-atom potential, and a particle of the second phase is set to have a particle size greater than a particle size determined by an inter-atom potential of the second phase.

According to this embodiment, the second phase having a low particle density behaves as a continuum.

It is to be noted that any arbitrary combination of the above-described structural components or rearrangement of the structural components and the expressions of certain embodiments of the invention among a device, a method, a system, a computer program, a recording medium having a computer program recorded thereon, and the like are also effective as the embodiments of the invention.

Advantageous Effects of Invention

According to the invention, it is possible to enable more accurate analysis of characteristic phenomenon in an interface of a multiphase flow.

Brief Description of Drawings

Fig. 1 is a schematic view showing an object to be analyzed of this embodiment.
Fig. 2 is a block diagram showing the function and configuration of an analyzer according to this embodiment.
Fig. 3 is a flowchart showing an example showing an example of a sequence of processing in the analyzer of Fig. 2.
Figs. 4A to 4T are diagrams showing calculation results using a method according to this embodiment.
Figs. 5A to 5T are diagrams showing calculation results using a method of the related art.
Fig. 6 is a schematic view showing an object to be analyzed of a modification example of an embodiment.

Description of Embodiments

Hereinafter, the invention will be described based on a preferred embodiment will be described referring to the drawings. The same or similar structural components, members, and processing shown in the respective drawings are represented by the same reference numerals, and overlapping description will be appropriately omitted.

Hereinafter, the principle of this embodiment will be described.

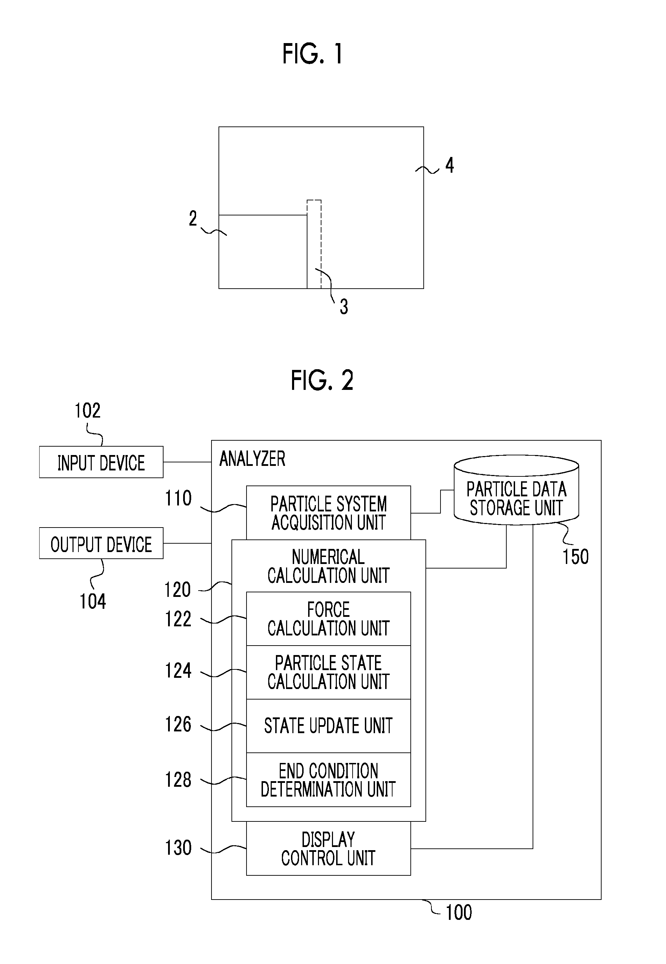

Fig. 1 is a schematic view showing a particle system which is an object to be analyzed of this embodiment. In Fig. 1, a liquid phase 2 is intercepted by a virtual wall 3, and the surrounding of the liquid phase 2 is filled with a gas phase 4 which is vapor of the liquid phase 2. In this embodiment, in Fig. 1, description will be provided assuming that phenomenon occurring when the wall 3 is removed is analyzed using the RMD method. That is, description will be provided assuming that characteristic phenomenon in an interface of a gas-liquid two-phase flow is analyzed using the RMD method.

When analyzing using the RMD method, a user first generates an object to be analyzed in a three-dimensional virtual space using an analyzer or another calculation device. The user arranges a plurality of particles in the MD method, that is, particles corresponding to atoms or molecules of the real world, in the virtual space. In an example, the number of particles to be arranged is about an Avogadro number.

The following description will be provided assuming that all particles are homogenous or equivalent and a potential energy function is based on pair potential and has the same form regardless of particles. However, it is obvious to those skilled in the art in contact with this specification that the technical concept of this embodiment can be applied to other cases.

Subsequently, the user applies a conversion rule in the RMD method to a system having a plurality of arranged particles. In an example, the number of particles is reduced to tens of thousands by tens of renormalizations.

Here, if the renormalization rank is increased, the number of particles of the gas phase 4 having a density lower than that of the liquid phase 2 is extremely decreased, and consequently, the gas phase 4 does not behave as a continuum. This is also apparent from the fact that, since a mean free path $\lambda$ is not changed at the time of renormalization, a Knudsen number Kn' of a renormalized system is increased. The Knudsen number Kn' is given by Expression (1) described below.

$$K'_n = \frac{\lambda}{L'} = K_n \alpha, \alpha = 2^n \quad \dots \quad (1)$$

Here, L' is a representative length of a system, $\alpha$ is a renormalization factor, and n is the number of renormalizations.

In order that the gas phase 4 behaves as a continuum, the mean free path $\lambda$ of a particle (hereinafter, referred to as "gas particle") of the gas phase 4 at the time of renormalization may be simultaneously converted, that is, the mean free path $\lambda$ may be made small to make the Knudsen number Kn' small. The mean free path $\lambda$ is given by Expression (2) described below.

$$\lambda = \frac{1}{n \pi d^2} \quad \dots \quad (2)$$

Here, n is a concentration, and d is a particle size.

The concentration n is determined from an equation of state (for example, in the case of ideal gas, $P = nk_BT$)

if temperature and pressure are designated. For this reason, the particle size may be increased so as to make the mean free path λ small to make the Knudsen number Kn' small.

Accordingly, the user can analyze the gas phase 4 as a continuum by substituting the particle size of the gas particle among the particles included in the renormalized system with a particle size greater than an atomic diameter (a diameter determined by potential), and can more accurately analyze characteristic phenomenon in the interface between the gas phase 4 and the liquid phase 2. The particle size of a particle (hereinafter, referred to as "liquid particle") of the liquid phase 2 may be set as the atomic diameter.

Next, a procedure for determining the particle size of the gas particle is shown.

In order that the gas phase 4 behaves as a continuum, the particle of the gas phase 4 needs to satisfy Expression (3) described below.

$$K_n < 0.16 \quad \dots \quad (3)$$

The lower limit of the particle size is determined from Expression (3) and Expression (2).

Since it is necessary to prevent the particles of the gas phase from overlapping each other, the particle of the gas phase 4 needs to satisfy Expression (4) described below.

$$d'^3 \leq \frac{1}{n} \quad \dots \quad (4)$$

The upper limit of the particle size is determined from Expression (4). The user may determine the particle size of the gas particle so as to fall within at least the ranges.

A Young's modulus Y and viscosity η have relationships with potential parameters ε and

$$\sigma = d / 2^{1/6}$$

as given by Expressions (5) and (6)

$$Y = \frac{2}{d} \phi_{L-J}^{(2)}(d) = \frac{144\varepsilon}{2^{1/3} d^3} \quad \dots \quad (5)$$

Here,

$$\phi_{L-J}^{(2)}(d)$$

is a second-order differentiation of a Lennard-Jones potential energy function.

$$\eta = \frac{1}{3} \sqrt{\frac{8mk_B T}{\pi^3}} \frac{1}{d^2} \quad \dots \quad (6)$$

Here, m is a mass, $k_B$ is a Boltzmann's constant, and T is absolute temperature.

Accordingly, the mass m, the potential parameters ε and σ, and the like are adjusted such that the values of the Young's modulus Y and the viscosity η are not changed, whereby it is possible to absorb fluctuations in the Young's modulus Y or/and viscosity η due to an increase in the particle size of the gas phase 4.

Next, a method of suppressing degradation of calculation efficiency due to an increase in the particle system of the gas particle will be described.

When dt is a time interval at which the RMD calculation of the liquid phase 2 is executed, if Expression (7) described below is satisfied, calculation efficiency is high.

$$dt << \sqrt{\frac{2^{1/3} m_{liquid}}{144 \varepsilon_{liquid}}} \left( \frac{\sigma_{liquid}}{\sigma_{liquid}} \right)^2 \leq \sqrt{\frac{2^{1/3} m'}{144 \varepsilon'}} \left( \frac{\sigma'^2}{d'} \right) \quad \dots \quad (7)$$

Here, $m_{liquid}$ is the density of the liquid particle, $d_{liquid}$ is the particle size of the liquid particle, and $\varepsilon_{liquid}$ and $\sigma_{liquid}$ are the potential parameters of the liquid particle.

In the case of the Lennard-Jones potential energy function, Expressions (3) and (4) are satisfied, for example, conversion is performed as follows.

$$d' = 3.5 \sigma_{liquid} \quad \dots \quad (8)$$

Here, $3.5\sigma_{liquid}$ is a cutoff radius for the interaction between the particles of the liquid phase 2.

Accordingly, the relationship of Expression (9) is established from Expressions (7) and (8).

$$m' \geq (1/3.5^2)(\varepsilon'/\varepsilon_{liquid}) m_{liquid} \quad \dots \quad (9)$$

If the particle density of the gas phase 4 is set so as to satisfy this relationship, the time interval can be increased and calculation efficiency can be enhanced. If the time interval is willing to be smaller than dt of the liquid, that is, if Expression (7) is not considered, an arbitrary density can be set. That is, if calculation efficiency is given priority, since the density can be limited, in Expression (6), viscosity $\eta$ may not be made to match a desired value. If making viscosity $\eta$ match the desired value is given priority, the time interval becomes small and calculation efficiency drops. Both are in a trade-off relationship.

Next, another method of suppressing degradation of calculation efficiency due to an increase in the particle system of the gas particle will be described.

If the particle size of the gas particle is made great, the distance at which the interaction is applied to the particle becomes great. For this reason, if the particle system is made great, for example, a large amount of particles of the liquid phase 2 may be included as the particles to which the interaction is applied. With this, objects to be calculated are increased, and the calculation time is extended. Accordingly, like Expression (10), an attractive force exerted on the particle of the gas phase 4 is made zero. That is, the cutoff radius is made small. Since the attractive force is cut, the gas phase 4 becomes ideal gas. In addition to this, if the particle size of the gas phase 4 is set to $3.5\sigma_{liquid}$ the same as the cutoff radius for the interaction between the particles of the liquid phase 2, the same number of calculations as in the related art can be maintained.

$$f = \begin{cases} -\nabla \phi_{L-J}(\gamma) & \gamma \leq d' \\ 0 & \gamma > d' \end{cases} \quad \dots \quad (10)$$

In summary, the user who uses the analyzer 100 may set the respective parameters relating to a particle included in a renormalized system in consideration of the followings.

(i) The particle size of the gas particle is substituted with the particle size satisfying Expressions (3) and (4), whereby the mean free path $\lambda$ becomes small and the Knudsen number Kn' becomes equal to or less than 0.16. That is, the gas phase 4 can behave as a continuum.

(ii) The mass m of the gas particle, the potential parameters $\varepsilon$ and $\sigma$, and the like are adjusted so as to satisfy Expressions (5) and (6), whereby fluctuations in the Young's modulus Y and/or viscosity $\eta$ due to an increase in the particle size of the gas particle can be absorbed.

(iii) If the density of the gas particle is set so as to satisfy Expression (9), the time interval can be made great and calculation efficiency is enhanced.

(iiii) The cutoff radius is set so as to satisfy Expression (10), whereby objects to be calculated are reduced, and the calculation time can be reduced.

The calculation necessary when setting the respective parameters relating to a particle included in a renormalized system with Expressions (1) to (10) may be performed by a numerical calculation unit 120 described below.

Next, an example of setting the respective parameters relating to the gas particle in consideration of the above is shown.

In order to satisfy Expressions (3) and (4) and to maintain the same number of calculations as in the related art, the particle size of the gas particle is set as follows.

$$d' = 3.5\sigma_{liquid}$$

A potential parameter $\varepsilon'$ is set as follows without consideration of Expressions (5) and (6), that is, without adjusting the Young's modulus Y and viscosity $\eta$.

$$\varepsilon' = \varepsilon_{liquid}$$

From this, if calculation efficiency is given priority, the mass of the gas particle becomes as follows from Expression (9).

$$m' = m_{liquid} / 3.5^2$$

At this time, the density of the gas phase becomes as follows.

$$\rho_{gas} = \rho_{liquid} / 3.5^5 = \rho_{liquid} / 525.22$$

If L' = 50 [nm], the Knudsen number becomes as follows and the gas phase 4 behaves as a continuum.

$$Kn = \frac{3.5\sigma_{liquid}}{\pi L'} = \frac{3.5 \times 0.2641 \times 10^{-9}}{\pi 50 \times 10^{-9}} = 5.8876 \times 10^{-3}$$

Next, a case of analyzing a particle system with respective parameters relating to a particle in consideration of the above will be described.

Fig. 2 is a block diagram showing the function and configuration of the analyzer 100. It should be noted that respective blocks shown in the drawing can be realized by hardware, for example, an element, such as a central processing unit (CPU) of a computer, or a mechanical device, or can be realized by software, for example, a computer program or the like. In the drawing, functional blocks which are realized by cooperation of hardware and software are shown. Therefore, it should be understood by those skilled in the art in contact with this specification that the functional blocks can be realized by a combination of hardware and software in various ways.

The analyzer 100 is connected to an input device 102 and an output device 104. The input device 102 may be a keyboard, a mouse, or the like which receives an input of a user related to processing executed on the analyzer 100. The input device 102 may be configured to receive an input from a network, such as the Internet, or a recording medium, such as a CD or a DVD. The output device 104 may be a display apparatus, such as a display, or a printing apparatus, such as a printer.

The analyzer 100 includes a particle system acquisition unit 110, a numerical calculation unit 120, a display control unit 130, and a particle data storage unit 150.

The particle system acquisition unit 110 acquires data of a particle system having N (where N is a natural number) particles defined in a one, two, or three-dimensional virtual space based on input information acquired from the user through the input device 102. The particle system is a particle system which is renormalized using the RMD method.

The particle system acquisition unit 110 arranges the N particles in the virtual space based on the input information and applies a speed to each of the arranged particles. The particle system acquisition unit 110 acquires parameters necessary for subsequent calculation, such as the mass of the particle, from the input information or information stored in the particle data storage unit 150. The particle system acquisition unit 110 registers the position of the arranged particle, the speed of the particle, and the mass of the particle in the particle data storage unit 150 in association with one another.

The numerical calculation unit 120 numerically calculates a governing equation which governs the movement of each particle of the particle system represented by data stored in the particle data storage unit 150. In particular, the numerical calculation unit 120 performs repetitive calculation according to an equation of motion of a discretized particle.

The numerical calculation unit 120 includes a force calculation unit 122, a particle state calculation unit 124, a state update unit 126, and an end condition determination unit 128.

The force calculation unit 122 refers to data of the particle system stored in the particle data storage unit 150 and calculates a force applied to the particle based on the inter-particle distance for each particle of each particle system. The force calculation unit 122 determines particles (hereinafter, referred to as near particles) whose distance from a particle to be calculated of a first particle system is less than a predetermined cutoff distance from the particle to be calculated.

For each near particle, the force calculation unit 122 calculates a force applied to the particle to be calculated by the near particle based on the potential energy function between the near particle and the particle to be calculated and the distance between the near particle and the particle to be calculated. In particular, the force calculation unit 122 calculates the force from the value of the gradient of the potential energy function at the value of the distance between the near particle and the particle to be calculated. The force calculation unit 122 sums the force applied to the particle to be calculated by the near particle for all near particles to calculate the force applied to the particle to be calculated.

The particle state calculation unit 124 refers to data of the particle system stored in the particle data storage unit 150 and applies the force calculated by the force calculation unit 122 to the equation of motion of the discretized particle for each particle of the particle system to calculate at least one of the position and speed of the particle. In this embodiment, the particle state calculation unit 124 calculates both the position and speed of the particle.

The particle state calculation unit 124 calculates the speed of the particle from the equation of motion of the discretized particle including the force calculated by the force calculation unit 122. The particle state calculation unit 124 substitutes the force calculated by the force calculation unit 122 in the equation of motion of the discretized particle using a predetermined minute time interval $\Delta t$ based on a predetermined numerical analysis method, such as a leapfrog method or a Euler method, for the particle of the first particle system, thereby calculating the speed of the particle. In the calculation, the speed of the particle calculated in the previous repetitive calculation cycle is used.

The particle state calculation unit 124 calculates the position of the particle based on the calculated speed of the particle. The particle state calculation unit 124 applies the calculated speed of the particle to a relationship expression of the position and speed of the discretized particle using the time interval $\Delta t$ based on a predetermined numerical analysis method for the particle of the first particle system, thereby calculating the position of the particle. In the calculation, the position of the particle calculated in the previous repetitive calculation cycle is used.

The state update unit 126 updates the position and speed of each particle of each particle system stored in the particle data storage unit 150 to the position and speed calculated by the particle state calculation unit 124.

The end condition determination unit 128 determines whether or not to end repetitive calculation in the numerical calculation unit 120. An end condition for ending repetitive calculation is, for example, that repetitive calculation is performed a predetermined number of times, an end instruction is received from the outside, or the particle system reaches a steady state. When the end condition is satisfied, the end condition determination unit 128 ends repetitive calculation in the numerical calculation unit 120. When the end condition is not satisfied, the end condition determination unit 128 returns the process to the force calculation unit 122. When this happens, the force calculation unit 122 specifies a contact particle pair with the position of the particle updated by the state update unit 126 again.

The display control unit 130 displays, on the output device 104, the form of a time expansion of the particle system or the state of the particle system at a certain time based on the position and speed of each particle of each particle system represented by data stored in the particle data storage unit 150. The display may be performed in the form of a still image or a moving image.

In the above-described embodiment, an example of the storage unit is a hard disk or a memory. It should be understood by those skilled in the art in contact with this specification that the respective units can be realized by a CPU (not shown), a module of an installed application program, a module of a system program, a memory which temporarily stores the contents of data read from the hard disk, or the like based on the description of the specification.

The operation of the analyzer 100 having the above-described configuration will be described.

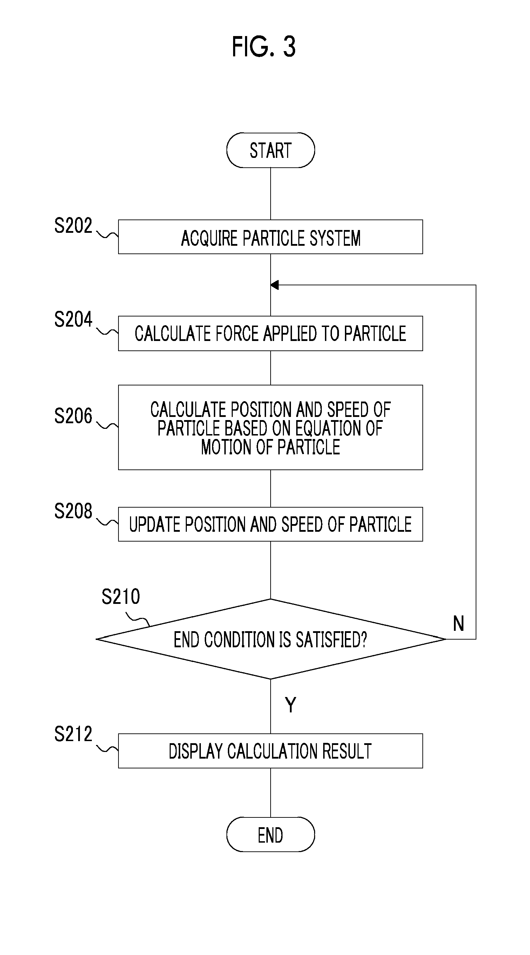

Fig. 3 is a flowchart showing an example of a sequence of processing in the analyzer 100. The particle system acquisition unit 110 acquires a particle system which is renormalized based on the RMD method (S202). The force calculation unit 122 calculates a force applied to a particle from the inter-particle distance (S204). The particle state calculation unit 124 calculates the speed and position of the particle from the equation of motion including the calculated force (S206). The state update unit 126 updates the position and speed of the particle stored in the particle data storage unit 150 to the calculated position and speed (S208). The end condition determination unit 128 determines whether or not the end condition is satisfied (S210). When the end condition is not satisfied (N in S210), the process returns to S204. When the end condition is satisfied (Y in S210), the display control unit 130 displays the calculation result on the output device 104 (S212).

In the analyzer 100 of this embodiment, a particle system in which the particle of the gas phase 4 having a lower particle density is set to have a particle size greater than an atomic diameter is acquired. The gas phase 4 which is set to have a great particle size behaves as a continuum. Therefore, even if a renormalization ranking is performed in a multiple manner, characteristic phenomenon occurring in the interface between the liquid phase 2 and the gas phase 4 can be reproduced.

In the analyzer 100 of this embodiment, since the number of particles of the gas phase 4 is not increased, calculation efficiency is high. Furthermore, since the time interval can be maintained to be the same as in the related art, calculation efficiency is high. In addition, the Knudsen number in a two-phase flow can be arbitrarily set.

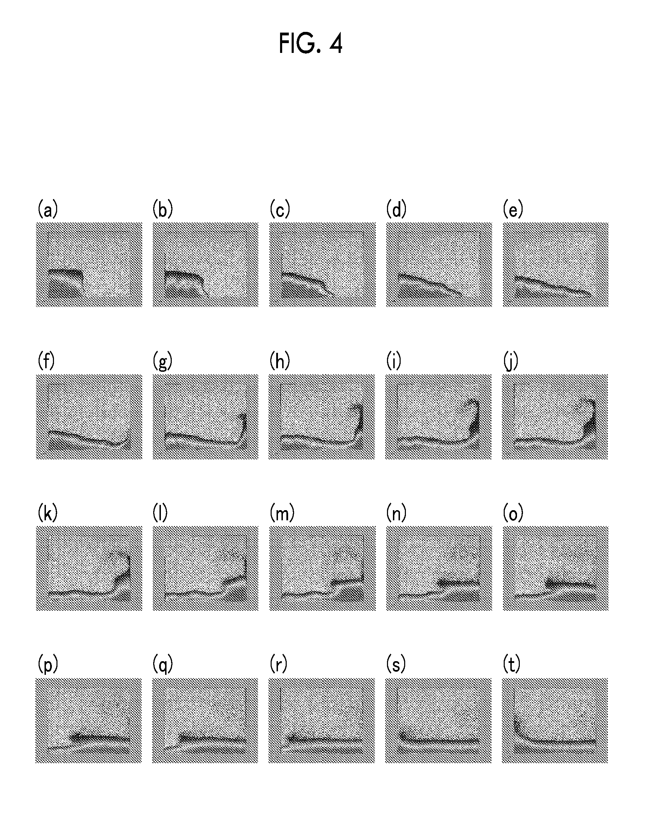

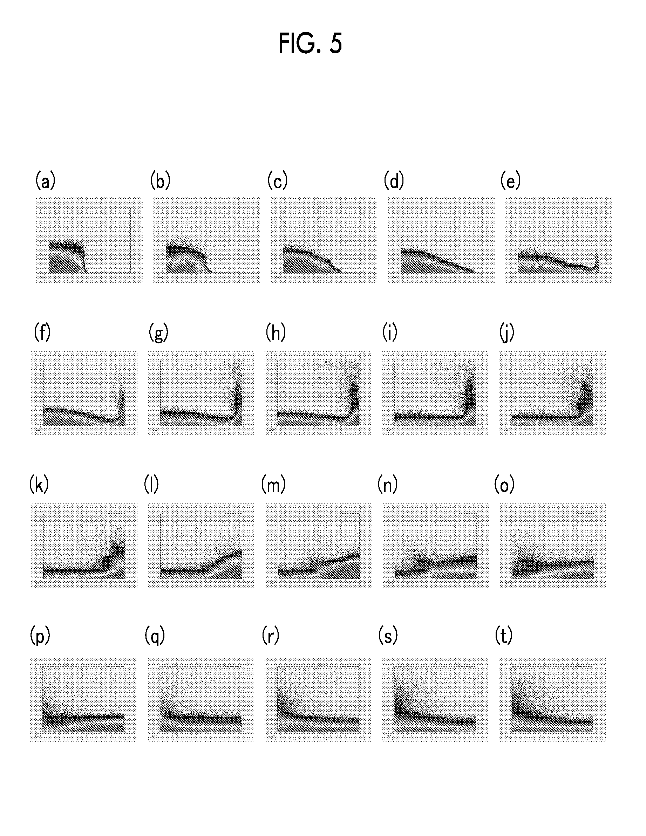

The inventors have performed verification calculation of the method according to this embodiment. Figs. 4A to 4T are diagrams showing calculation results using the method according to this embodiment. Figs. 5A to 5T are diagrams showing calculation results when the method according to this embodiment is not used (the method of the related art is used). Figs. 4A to 4T and 5A to 5T show a temporal change in a pressure distribution when the wall 3 is removed in Fig. 1.

(Calculation Conditions)

· gas particle (the method according to this embodiment)

  particle system d: 1.24726 [nm]
  mass m: 18 [g]
  potential parameter $\sigma$: 1.4 [nm]
  potential parameter $\varepsilon$: 296 [K]

· gas particle (the method of the related art)

  particle system d: 0.41655 [nm]
  mass m: 14 [g]
  potential parameter $\sigma$: 0.3711 [nm]
  potential parameter $\varepsilon$: 78.62 [K]

· liquid particle (the method according to this embodiment and the method of the related art)

  particle system d: 0.4 [nm]
  mass m: 18 [g]
  potential parameter $\sigma$: 0.2641 [nm]
  potential parameter $\varepsilon$: 404.71 [K]

In the method according to this embodiment, for example, as shown in Fig. 4N, it is understood that Rayleigh-Taylor instability appears and the particle of the gas phase behaves as a continuum. In contrast, in the RMD method of the related art in which the method according to this embodiment is not used, for example, as shown in Fig. 5J, it is understood that the liquid particles are scattered ballistically and the particles of the gas phase do not behave as a continuum.

As described above, the configuration and operation of the analyzer 100 according to the embodiment have been described. The embodiment is illustrative, and it will be understood by those skilled in the art that various modification examples may be made to the combination of the structural components or the processing and the modification examples still fall within the scope of the invention.

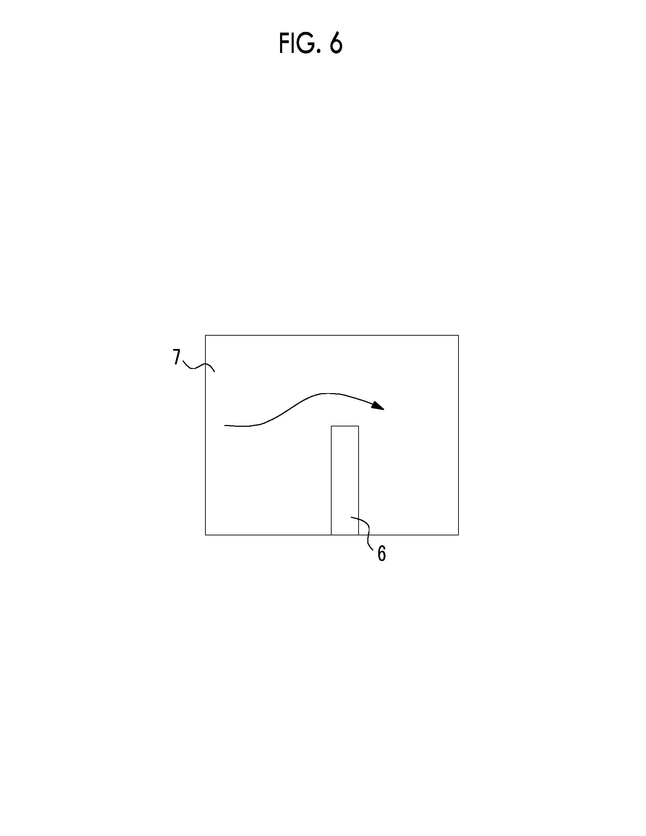

In the embodiment, although a case where characteristic phenomenon in the interface of the gas-liquid two-phase flow is analyzed with the RMD method has been described, the invention is not limited thereto, and the invention can be applied to a case where characteristic phenomenon in the interfaces of various multiphase flows is analyzed with the RMD method. Fig. 6 is a schematic view showing an object to be analyzed according to a modification example. In Fig. 6, a form in which a gas phase 7 is blown to a solid phase 6 as a wall is shown. The method according to this embodiment can also be applied to such a solid-gas two-phase flow.

Reference Signs List

100:     analyzer
102:     input device
104:     output device
110:     particle system acquisition unit
120:     numerical calculation unit
122:     force calculation unit
124:     particle state calculation unit
126:     state update unit
128:     end condition determination unit
130:     display control unit
150:     particle data storage unit

Industrial Applicability

According to the invention, it is possible to enable more accurate analysis of characteristic phenomenon in an interface of a multiphase flow.

**Claims**

1.  An analyzer which analyzes a multiphase flow using a renormalized molecular dynamics method, the analyzer comprising:

    a particle system acquisition unit configured to acquire a particle system including a plurality of particles describing the multiphase flow;
    a force calculation unit configured to calculate a force applied to a particle based on an inter-particle distance; and
    a particle state calculation unit configured to calculate at least one of the position and speed of the particle by applying the force calculated by the force calculation unit to an equation of motion of a discretized particle,
    wherein the multiphase flow is a flow in which at least a first phase and a second phase having a particle density lower than that of the first phase are mixed, and
    a particle of the first phase is set to have an atomic diameter, and a particle of the second phase is set to have a particle size greater than the atomic diameter.

2.  The analyzer according to claim 1,
    wherein the particle of the second phase is set to have a particle size where a Knudsen number is equal to or less than a predetermined value.

3.  The analyzer according to claim 2,
    wherein the particle of the second phase is set to have a particle size where the Knudsen number is equal to or less than 0.16.

4.  The analyzer according to any one of claims 1 to 3,
    wherein the particle of the second phase is set to have a particle size such that particles do not overlap each other.

5.  The analyzer according to any one of claims 1 to 4,
    wherein the particle of the second phase is set to have a mass which satisfies the following expression.

$$m_2 \geq (1/3.5^2)(\varepsilon_2 / \varepsilon_1)m_1$$

$$\left( \begin{array}{l} m_1 : \text{mass of particle of first phase} \\ m_2 : \text{mass of particle of second phase} \\ \varepsilon_1 : \text{potential parameter of particle of first phase} \\ \varepsilon_2 : \text{potential parameter of particle of second phase} \end{array} \right)$$

6. The analyzer according to any one of claims 1 to 5,
   wherein the force calculation unit makes an attractive force exerted on a particle of the second phase when calculating a force applied to a particle using a potential energy function.

7. A computer program which causes a computer to realize a function of analyzing a multiphase flow using a renormalized molecular dynamics method, the computer program comprising:

   a function of acquiring a particle system including a plurality of particles describing the multiphase flow;
   a function of calculating a force applied to a particle based on an inter-particle distance; and
   a function of calculating at least one of the position and speed of the particle by applying the force calculated by the calculation function to an equation of motion of a discretized particle,
   wherein a particle of a phase having a high density among the plurality of particles included in the particle system acquired by the acquisition function is set to have an atomic diameter, and a particle of a phase having a low density is set to have a particle size greater than the atomic diameter.

## FIG. 1

## FIG. 2

# FIG. 3

```
        ( START )
            │
S202   ┌─────────────────────────────┐
    ⌇  │   ACQUIRE PARTICLE SYSTEM   │
       └─────────────────────────────┘
            │
            ▼◄──────────────────────────────┐
S204   ┌─────────────────────────────┐      │
    ⌇  │ CALCULATE FORCE APPLIED TO  │      │
       │          PARTICLE           │      │
       └─────────────────────────────┘      │
            │                               │
S206   ┌─────────────────────────────┐      │
    ⌇  │ CALCULATE POSITION AND SPEED OF │  │
       │  PARTICLE BASED ON EQUATION OF  │  │
       │       MOTION OF PARTICLE        │  │
       └─────────────────────────────┘      │
            │                               │
S208   ┌─────────────────────────────┐      │
    ⌇  │ UPDATE POSITION AND SPEED OF PARTICLE │  │
       └─────────────────────────────┘      │
            │                               │
S210        ◇                           N   │
    ⌇  < END CONDITION IS SATISFIED? >──────┘
            │
            │ Y
S212   ┌─────────────────────────────┐
    ⌇  │   DISPLAY CALCULATION RESULT │
       └─────────────────────────────┘
            │
        (  END  )
```

FIG. 4

(a)      (b)      (c)      (d)      (e)

(f)      (g)      (h)      (i)      (j)

(k)      (l)      (m)      (n)      (o)

(p)      (q)      (r)      (s)      (t)

# FIG. 5

FIG. 6

**INTERNATIONAL SEARCH REPORT**

| International application No. |
| --- |
| PCT/JP2013/006091 |

**A. CLASSIFICATION OF SUBJECT MATTER**
*G06F19/00*(2011.01)i

According to International Patent Classification (IPC) or to both national classification and IPC

**B. FIELDS SEARCHED**

Minimum documentation searched (classification system followed by classification symbols)
G06F19/00

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)
CiNii, JSTPlus(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | Hiromi KASHIWABARA, "Kurikomi Gun Bunshi Dorikigaku ni yoru Micro Ryutai Kaiseki ni Kansuru Kosatsu", Japan Society for Simulation Technology Ronbunshu, 2012.06, vol.4, no.1, pages 1 to 8 | 1-7 |
| A | Daiji ICHISHIMA, "Kurikomi Gun Bunshi Dorikigaku ni yoru Nagare no Keisanki Jikken", Sumitomo Heavy Industries Technical Review, 20 August 2010 (20.08.2010), no.173, pages 29 to 32 | 1-7 |

| ☒ Further documents are listed in the continuation of Box C. | ☐ See patent family annex. |

\* Special categories of cited documents:
"A" document defining the general state of the art which is not considered    to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 28 October, 2013 (28.10.13) | 12 November, 2013 (12.11.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2013/006091 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-146368 A (Sumitomo Heavy Industries, Ltd.), 01 July 2010 (01.07.2010), entire text; all drawings & EP 2369514 A1          & US 2011/246167 A1 & KR 2011-0086624 A      & WO 2010/070803 A2 & CN 102257500 A | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010146368 A